Europäisches Patentamt

European Patent Office

Office européen des brevets

(11) Publication number: **0 107 267**
A1

## (12) EUROPEAN PATENT APPLICATION

(21) Application number: **83303671.8**

(51) Int. Cl.³: **H 01 M 2/12**

(22) Date of filing: **24.06.83**

(30) Priority: **28.06.82 US 392960**

(43) Date of publication of application: **02.05.84**
Bulletin **84/18**

(84) Designated Contracting States: **BE CH FR GB LI**

(71) Applicant: **UNION CARBIDE CORPORATION, Old Ridgebury Road, Danbury Connecticut 06817 (US)**

(72) Inventor: **Huhndorff, Harry Roland, 322 Plymouth Drive, Bay Village 44140 Ohio (US)**

(74) Representative: **McCall, John Douglas et al, W.P. THOMPSON & CO. Coopers Building Church Street, Liverpool L1 3AB (GB)**

(54) Galvanic cell having pressure relief cover.

(57) There is disclosed a cover-diaphragm/gasket assembly (4) having a safety, non-resealable pressure relief means formed by punching in the cover at least one opening (8) with at least one extending tooth (12) that is disposed in cooperative relation to the diaphragm/gasket (4) so that upon a build up of internal pressure, the diaphragm section (6) will be expanded into the opening where the diaphragm will be torn, to provide a vent.

EP 0 107 267 A1

GALVANIC CELL

This invention relates to a safety, non-resealable pressure relief device for galvanic cells.

Some galvanic cells generate large quantities of gas under certain conditions during use. Since many cells are required to be tightly sealed at all times in order to prevent loss of electrolyte by leakage, high internal gas pressures may develop. Such pressures may cause leakage, bulging or possible explosion of the cell if not properly vented. If a vent valve is employed, it generally is resealable in order to avoid drying out of the electrolyte over the life of the cell and to prevent ingress of oxygen from the atmosphere which can cause wasteful corrosion of the anode.

In the past several different types of resealable pressure relief vent valves have been used for releasing high internal gas pressures from inside a sealed galvanic cell. One type of valve that has been commonly used consists basically of a

- 2 -

valve member, such as a flat rubber gasket, which is biased into sealing position over a vent orifice by means of a resilient member, such as a helical spring. The resilient member or spring is designed to yield at a certain predetermined internal gas pressure so as to momentarily relieve the seal and allow the gas to escape through the vent orifice.

Another type of resealable vent is disclosed in U.S. Patent No. 3,415,690 to Richman issued on December 10, 1968. In this vent, a flat elastomeric seal gasket overlies the vent opening and is retained in place by a resilient terminal cap on the top of the cell. This vent operates in generally the same manner as the vent previously described.

In U.S. Patent No. 3,664,878 to Amthor issued on May 23, 1972, a resealable vent is disclosed which comprises a resilient deformable ball of elastomeric material positioned to overlie a vent orifice provided within the cell's container. A retainer means is positioned over the resilient ball for maintaining the ball in place over the vent orifice and in contract with a valve seat provided around the peripheral edge portions of the vent orifice and for compressing and deforming the resilient ball into a flattened configuration forming a normally fluid-tight seal between the flattened ball and the valve seat. The resilient ball is capable of undergoing further temporary deformation upon the buildup of a predetermined high internal gas pressure inside the container so as to momentarily break the seal and allow gas to escape through the vent orifice.

A major problem encountered with resealable pressure relief vent valves of the types just described is that they are bulky and/or difficult to incorporate into the cell assembly. Furthermore, these pressure relief vent valves are expensive to manufacture. In addition, some of the prior art resealable vents as exemplified by the foregoing patents are not suitable for low pressure venting.

Alternates to high pressure resealable vent means are fail safe venting systems as illustrated in U.S. Patents 3,218,197 and 3,314,824. Specifically in the '197 patent a venting means is disclosed in which the seal gasket has a thin section that will rupture or "blow-out" at a predetermined high pressure buildup within the cell. The difficulty with this type of venting means is that it is difficult to obtain consistency in the thickness of the "blow-out" section of the gasket using conventional manufacturing techniques. In the '824 patent a puncture-type safety seal is disclosed which comprises a spring washer positioned within the cell's seal assembly and a radially acting toothed puncture washer. The teeth of the washer slide relative to the spring washer when the spring washer is subjected to internal pressure so that at a predetermined gas pressure buildup, the teeth of the washer will puncture the seal's gasket thereby providing a vent passage. This type of venting means requires several component parts, and is rather expensive to make and assemble.

A sealing and pressure relief device for galvanic cells is shown in U.S. Patent 3,062,910 which comprises a thin diaphragm having a central portion which is outwardly bendable under fluid

- 4 -

pressure. The diaphragm is subject to the pressure within the cell and is mounted in cooperative relation to a cover member carrying a rigid tooth the end of which is normally disposed adjacent to the diaphragm such that the diaphragm is capable of being pierced by the tooth upon the development of a predetermined high gas pressure in the cell.

As discussed above, resealable, high pressure relief vent valves are generally bulky and/or difficult to incorporate into a cell assembly, while low pressure vent means for some cell systems may not adequately and sufficiently prevent loss of electrolyte through leakage or prevent ingress of oxygen from the atmosphere which could cause wasteful corrosion of the anode.

In the arrangement of the present invention the cover of each cell has an opening which defines at least one horizontal tooth or initially defines at least two cooperating teeth which are subsequently bent inwardly towards the diaphragm section of a diaphragm/gasket member. Thus upon an internal gas pressure buildup, the diaphragm section will be forced against the tooth or teeth of the cover and tear thereby providing a vent passage for the gas to escape.

One aspect of the invention is directed to a galvanic cell in which the cover is disposed over and mounted in cooperative relation to a diaphragm/gasket member and is provided with an opening which defines at least one horizontal tooth such that an internal gas pressure buildup within the cell will force the diaphragm section of the diaphragm/gasket

member against the tooth and tear the diaphragm section thereby providing a vent passage for the gas to escape.

Another aspect of this invention is directed to a galvanic cell in which the cover is disposed over and mounted in cooperative relation to a diaphragm/gasket member and is provided with an opening which initially defines at least two cooperating teeth subsequently bent inwardly towards the diaphragm section of the diaphragm/gasket member such that an internal gas pressure buildup within the cell will force the diaphragm section again the sharp points of the teeth thereby tearing the diaphragm section to form a vent passage for the gas to escape.

According to the present invention there is provided a galvanic cell comprising a container having an open end and an inner disposed active ahode, an active cathode and an electrolyte within said container; a diaphragm/gasket member disposed over the anode and the cathode; and a cover secured over and insulated from the open end of the container; the improvement wherein said cover has at least one opening with at least two cooperating teeth extending therefrom **which are bent inwardly toward the diaphragm section of the. diaphragm/gasket member and said diaphragm/gasket being in cooperative relation to. the teeth so that upon a predetermined level of an internal gas pressure buildup within the cell the diaphragm section will be forced against the sharp end of the teeth thereby securing, puncturing and tearing the diaphragm section to form a vent opening for the gas to escape.**

According to another embodiment of the invention there is provided a galvanic cell comprising a container having an open end and an inner disposed active **anode, an active cathode and an electrolyte within said container; a diaphragm/gasket member disposed over the anode and the cathode; and a cover secured over and insulated from the open end of the container; the improvement wherein said cover has at least one opening which defines at least one tooth disposed substantially parallel to the plane of the edge defining said opening such that a predetermined level of an internal gas pressure buildup within the cell will force the diaphragm section of the diaphragm/gasket member against the sharp end of the tooth thereby shearing and tearing the diaphragm section to form a vent opening for the gas to escape.**

By way of the present invention there may be provided;

(i) a compact and economical high pressure vent for use in galvanic cells.

(ii) a high pressure vent for galvanic cells which requires a small number of parts and which is easy to assemble and inexpensive to manufacture.

**The cell of this invention is generally encased in an outer cell jacket with an appropriate terminal disc at each end in a conventional manner. Any expelling of the closure means from the cell could distort the jacket and/or terminal discs to a degree where the cell could possibly get lodged in the device in which it is assembled. In addition, any projecting of component parts out of the cell is usually accompanied by a relatively loud noise that could upset or even frighten the individual or individuals in close proximity to the device containing the cell. To prevent the possibility of**

such damage or noise from the release of high pressure buildup within a cell, the present invention is directed to a unique and simple pressure relief means that permits a projected tooth or teeth in the cover to tear the diaphragm section thereby forming a passage or opening for venting the gas after a predetermined high pressure buildup. This will prevent the cover or any other component of the cell from being expelled from the cell and at the same time effectively eliminate the loud noise usually accompanied by any such expulsion.

The first embodiment, which employs a cover with at least one opening with at least two cooperating teeth extending therefrom and which teeth are bent inwardly toward the diaphragm section of the diaphragm/gasket member, can be easily produced by simply punching overlapping holes in the cover and then bending the teeth, with the burr side of the teeth at the bottom surface, into the container. This will provide at least two spaced-apart teeth directed inwardly towards the flexible diaphragm section or portion of the diaphragm/gasket member. Thus as gas pressure buildup occurs, the flexible diaphragm section disposed opposite the teeth will deflect or expand and contact the burr side of the teeth. The teeth will secure and restrict a portion of the expanding diaphragm section such that upon a predetermined gas pressure buildup, the restricted portion of the diaphragm section will puncture and tear, thereby providing a pathway or opening for venting the excessive internal gas pressure. The opening so formed in the diaphragm section will be sufficiently large so that it will not be effectively blocked by any portion of the active materials forced towards the opening. Without the teeth to restrict and secure a portion of the diaphragm section, the diaphragm section would expand through the opening like a balloon and only burst when a dangerous excessive pressure buildup occurred. The teeth function to restrict and secure a portion of the diaphragm section so that at a predetermined pressure buildup, the pressure will expand, stretch or otherwise thin out the restricted portion of the diaphragm section whereupon the tips of the teeth will be sufficient to pierce and tear the expanded, restricted portion of the diaphragm section.

The overlapping holes in the cover to form at least two teeth could assume many configurations. For example, a circular, square, triangle, rectangle, or any polygonal contour punch could be employed for punching overlapping holes in the cover. In addition, the overlapping holes do not have to be the same configuration but could comprise one circular opening overlapping a square opening or the like.

The number of teeth extending from the edge of the opening can be more than two. For example, when two overlapping triangular contours are punched and one is displaced by 60° in the cover, six cooperating teeth are formed, whereupon two or more of the teeth can then be bent into the cell. This embodiment will provide multiple securing and restricting tips for the diaphragm section when said section deflects or expands due to internal pressure buildup. The holes need not overlap but could touch and still form cooperating teeth in accordance with this invention. For example, a square opening could be disposed adjacent to and touching the peak of a triangular opening to form two cooperating teeth as will be described below in conjunction with the drawings. Once the teeth are formed, they can be

0107267

- 9 -

bent into the cell facing the diaphragm section in any conventional manner.

The mode of operation is that internal pressure (fluid or gas) will deflect and expand a portion of the diaphragm section against the inwardly orientated teeth. A portion of the diaphragm section will be restricted by the teeth and the central portion will pass between the tips of the teeth into the opening in the cover. The cooperating action of the teeth is such that the diaphragm section will be torn open or apart upon a buildup of a predetermined pressure level. This means that the higher the pressure, the bigger the vent opening formed. In an embodiment employing only a single bent tooth, the material of the diaphragm may flow laterally and simply envelope the single tooth without full penetration and tearing of the material.

In the second embodiment the cover of the cell has at least one opening which defines at least one tooth that is disposed in the plane of the edge defining said opening. In a similar manner as above, the tooth and burr associated therewith secures and restrains a portion of the diaphragm section that is expanded into the opening due to internal pressure buildup within the cell. Thus upon reaching a predetermined level, the internal force will expand and stretch the portion of the diaphragm section through the opening in the cover whereby the tooth will shear the diaphragm section to provide a vent opening for the gas to escape. Again if the opening in this embodiment is punched in a conventional manner, then it is even more preferable than in the first embodiment to have the burred edge of the tooth facing the diaphragm section. This embodiment is preferable for small size cells in which the spacing between the cover and diaphragm/gasket is limited. Thus the diaphragm/gasket could be placed in contact with the internal surface of the cover, while in the first embodiment the diaphragm/gasket has to be spaced from the cover by at least the projected distance of the teeth into the cell. In either embodiment, a portion of the metal is generally removed from the cover in the process of making the teeth as opposed to a simple lancing without loss of metal.

Preferably, at least the undersurface of the diaphragm/gasket should be coated with a protective material such as asphalt, wax or the like to minimize any stress corrosion of the diaphragm/gasket when in contact with a caustic electrolyte. Asphalt is the preferred coating material because it is inexpensive and inert to most electrolytes such as KOH. The asphalt will isolate the diaphragm/gasket from the electrolyte and thereby allow the diaphragm/gasket to retain its physical and chemical properties. The diaphragm/gasket could also be coated with a fatty polyamide as disclosed in U.S. Patent No. 3,922,178. Fatty polyamides are described on pages 597 to 615 in Volume 10 of the "Encyclopedia of Polymer Science and Technology", Interscience Publishers (John Wiley and Sons, Inc.), New York. Briefly, fatty polyamides are produced by reacting a polybasic acid with a polyfunctional amine. Generally the polybasic acids are principally dibasic acids formed by the dimerization of, for instance, a $C_{18}$ unsaturated fatty acid derived from an unsaturated vegetable oil. Such dimers are then reacted with a diamine, such as ethylenediamine, propylenediamine, and the like.

The internal pressure level at which the cell can be made to vent can be predetermined by selecting the identity and thickness of the diaphragm/gasket material and the diaphragm section spacing from the cover; the size, shape and number of teeth; the size, shape and number of openings; the size, thickness and shape of the cover; and the specific embodiment of the invention to be employed. Preferably, for cylindrical cells having a diameter of about 1.0 inch ("C" size), the venting pressure would be between about 500 psi to 700 psi, more preferably about 550 psi to about 650 psi. For cylinder cells having a diameter of about 1.25 ("D" size), the venting pressure would be between about 300 psi to about 550 psi, and more preferably about 350 psi to 500 psi.

The diaphragm/gasket for use in this invention has to be stable in the presence of the cell components and can be selected from such materials as polytetrafluoroethylene, fluorinated ethylene-propylene, ethylene copolymer with fluorinated ethylene-propylene, chlorotrifluoroethylene, perfluoro-alkoxy polymer, polyvinyl, polyethylene, polypropylene, polystyrene, nylon, etc. Preferably a nylon material marketed under the Tradename Zytel 101 (6-6 nylon), 151 (6-12 nylon) or 151L (lubricated) by Dupont Inc. should be employed. Of the above nylons, 6-12 nylon would be the most preferred.

The subject invention is admirably suitable for use in the following cell systems:

lithium-MnO$_2$ cells, lithium-iron sulfide cells, alkaline-MnO$_2$ cells, and nickel-cadmium cells.

The present invention will become more apparent from the following description thereof when considered together with the accompanying drawing which is set forth as being exemplary of embodiments of the present invention and is not intended in any way to be limitative thereof.

Figure 1 is a top plan view of a cover-diaphragm/gasket assembly for use in a galvanic cell in accordance with this invention.

Figure 2 is a sectional elevation taken through line 2-2 of Figure 1.

Figure 3 is a perspective view of a sealed galvanic cell using the diaphragm/gasket assembly of Figure 1.

Figure 4 is a partial sectional elevation of the cover-diaphragm/gasket assembly of Figure 3 illustrating the expansion of the diaphragm section of the diaphragm/gasket member through the opening in the cover and being restrained by the inturned teeth.

Figure 5 is a top plan view of another embodiment of a cover-diaphragm/gasket assembly for use in a galvanic cell in accordance with this invention.

Figure 6 is a sectional elevation taken through line 6-6 of Figure 5.

Figure 7 is a perspective view of a sealed galvanic cell using the cover-diaphragm/gasket assembly of Figure 5.

Figure 8 is a top plan view of a cover-diaphragm gasket assembly for use in a galvanic

cell in accordance with this invention.

Figure 9 is a sectional elevation taken through line 9-9 of Figure 8.

Figure 10 is a perspective view of a sealed galvanic cell using the cover-diaphragm/gasket assembly of Figure 8.

Figure 11 is a top plan view of a cover-diaphragm/gasket assembly for use in a galvanic cell in accordance with this invention.

Figure 12 is a sectional elevation taken through line 12-12 of Figure 11.

Figure 13 is a perspective view of a sealed galvanic cell using the cover-diaphragm/gasket assembly of Figure 11.

Figure 14 is a partial sectional elevation of the cover-diaphragm/gasket assembly of Figure 13 illustrating the expansion of the diaphragm section of the diaphragm/gasket member through the opening in the cover and being restrained by the teeth.

Figure 15 is a top view of a cover having an opening formed by punching overlapping triangular contours in the cover.

Figure 16 is a top view of a cover having an opening formed by punching overlapping circular contours in the cover.

Figure 17 is a top view of a cover having an opening formed by punching overlapping square contours in the cover.

Figure 18 is a top view of a cover having an opening formed by punching in the cover triangular contours that touch each other.

Figure 19 is a top view of a cover having an opening formed by punching a square contour that touches a triangular contour in the cover.

Figure 20 is a top view of a cover having an opening formed by punching overlapping triangular contours in the cover.

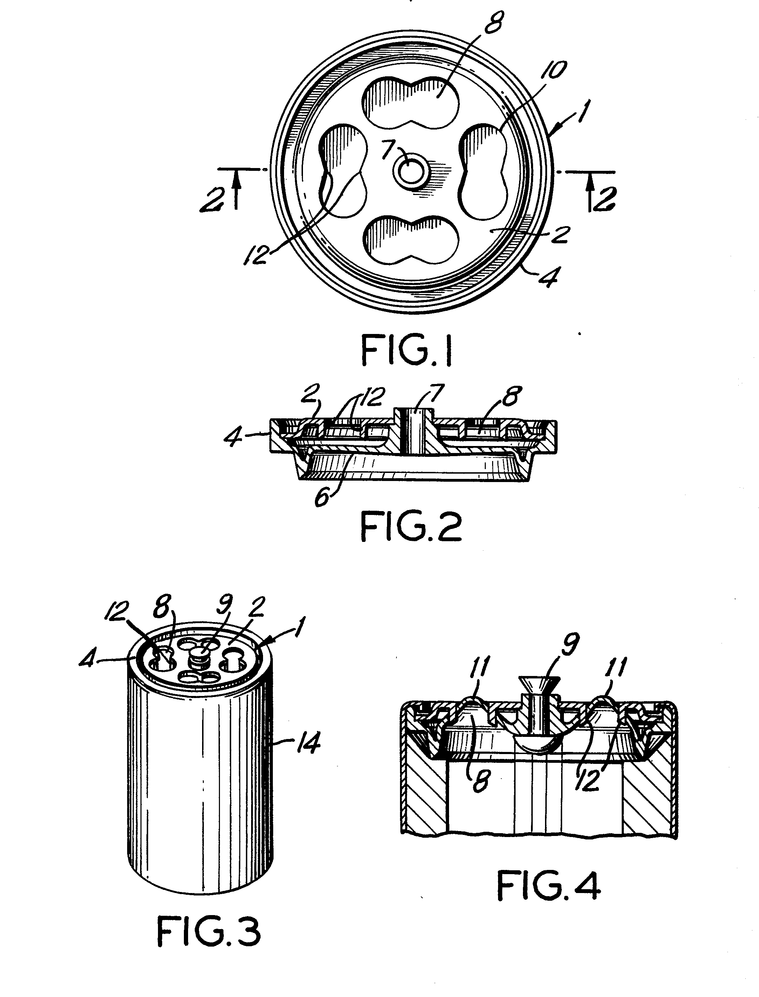

Referring to the drawing, Figures 1 and 2 show a cover-diaphragm/gasket assembly 1 comprising a cover 2 sealed in a diaphragm/gasket 4, said diaphragm/gasket 4 having a thin flexible base diaphragm section 6 disposed below opening 8 in the cover and having a central hub opening 7 adapted for receiving the current collector of the cell. Each opening 8 is formed by punching overlapping circular contours 10 in the cover so as to form or define two cooperating teeth 12 which are shown bent inwardly towards diaphragm section 6 of diaphragm/gasket 4. Figure 3 shows the cover-diaphragm/gasket assembly 1 of Figures 1 and 2 seated in a conventional cell container 14 whereupon the container 14 is radially compressed against the cover-diaphragm/gasket assembly 1 in a conventional manner to seal the cell. Projecting above the central opening 7 in the diaphragm/gasket member 4 is current collector 9.

Figure 4 illustrates what occurs when the flexible diaphragm section 6 of diaphragm/gasket 4 deflects and expands from internal pressure buildup in the cell whereupon it balloons through opening 8 where it becomes secured and restrained by teeth 12. This secures and causes the diaphragm to stretch until it becomes torn open to produce a vent opening 11 for the internal gas in the cell to escape.

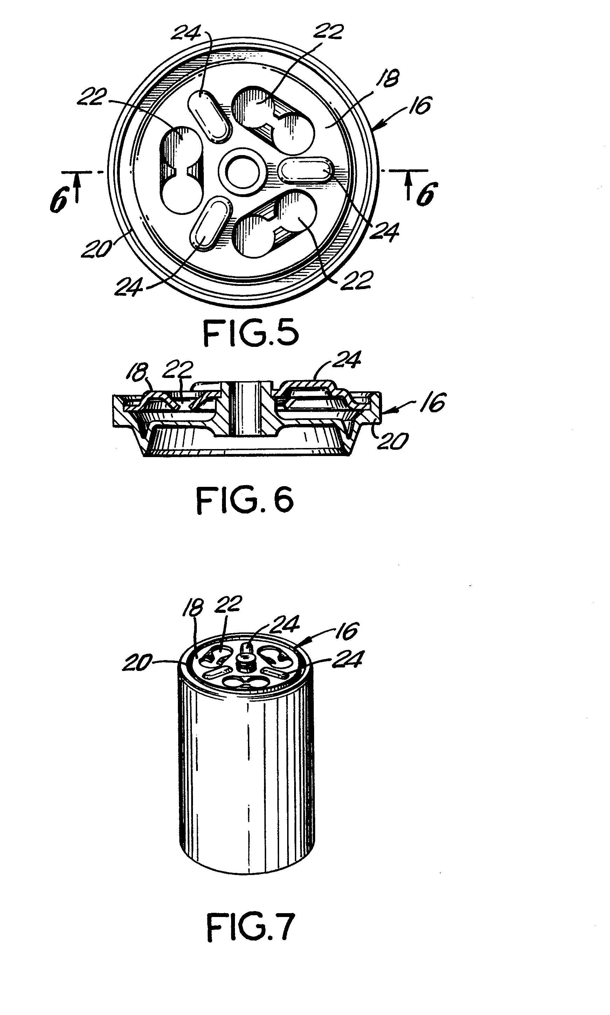

Figures 5, 6 and 7 illustrates another embodiment of this invention comprising a cover-diaphragm/gasket assembly 16 composed of a cover 18 and diaphragm/gasket 20. In addition to three openings 22 similar to the openings 8 in

Figure 1, the cover has three spaced apart ridges 24, each ridge 24 disposed between adjacent openings 22. These ridges provide stiffness to the cover and in some applications provides an electrical connection to a shorting washer, if employed.

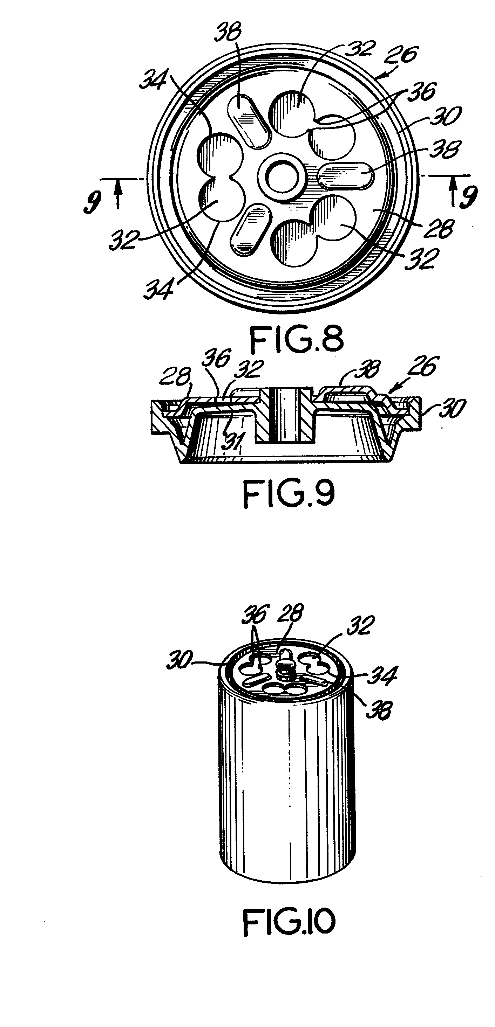

Figure 8, 9 and 10 illustrate another embodiment of this invention comprising a cover-diaphragm/gasket assembly 26 composed of a cover 28 and diaphragm/gasket 30. The diaphragm section 31 of diaphragm/gasket 30 is disposed adjacent the underside of cover 28. The cover 28 has three spaced-apart openings 32. Each opening 32 is formed by punching two overlapping circular contours 34 in the cover 28 so as to form two opposed teeth 36, each of which is disposed substantially in the plane of the edge defining the opening 32. As in the cover 18 of Figure 5, cover 28 has three spaced-apart ridges 38 which are used for the reason discussed above.

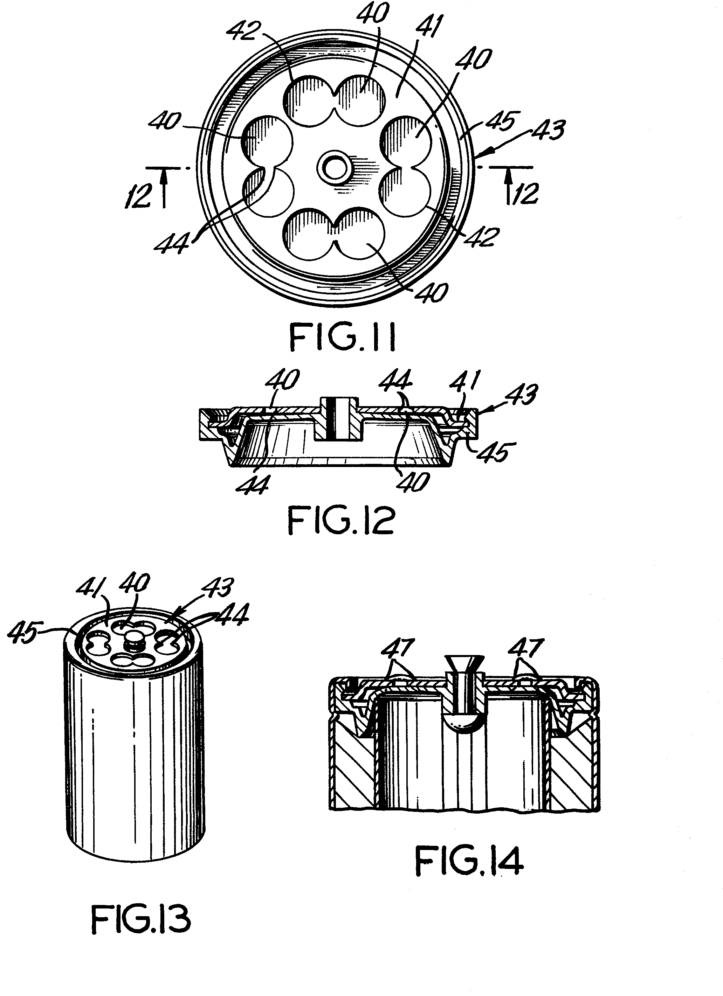

Figure 11, 12 and 13 illustrate another embodiment of this invention that is similar to that shown in Figures 8, 9 and 10, except that four spaced-apart openings 40 are formed in the cover 41 of cover-diaphragm/gasket assembly 43. Each opening 40 is formed by punching two overlapping circular contours 42 to form two opposed teeth 44. Each tooth is disposed substantially in the plane of the edge defining the opening 40 and the diaphragm section 39 of diaphragm/gasket 45 is disposed adjacent to the underside of cover 41.

Figure 14 illustrates what occurs when the diaphragm section 39 expands from internal pressure buildup in the cell whereupon it balloons through opening 40 where it becomes secured and restrained by teeth 44. This stretches the diaphragm section 39 until it becomes torn open to produce a vent opening 47 for the internal gas in the cell to escape.

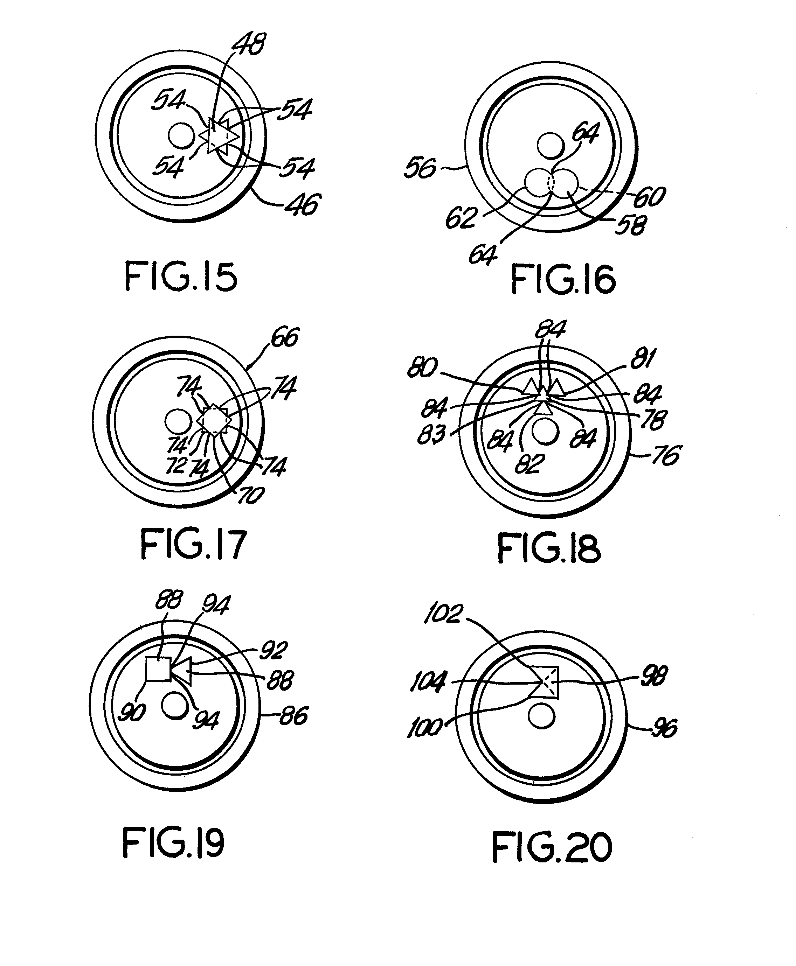

Figures 15 to 20 illustrate several embodiments of covers for use in this invention having various opening contours forming cooperating teeth. Figure 15 shows a cover 46 having an opening 48 formed by punching two overlapping triangular contours 50, 52 which forms opposing teeth 54.

Figure 16 shows a cover 56 having an opening 58 formed by punching two overlapping circular contours 60, 62 which forms opposing teeth 64.

Figure 17 shows a cover 66 having an opening 68 formed by punching two overlapping square contours 70, 72 which forms opposing teeth 74.

Figure 18 shows a cover 76 having an opening 78 formed by punching four touching triangular contours 80, 81, 82, 83 which forms opposing teeth 84.

Figure 19 shows a cover 86 having an opening 88 formed by punching a square contour 90 touching the tip of a triangular contour 92 which forms opposing teeth 94.

Figure 20 shows a cover 96 having an opening 98 formed by punching overlapping triangular contours 100, 102 to form tooth 104.

Although the teeth are shown disposed substantially parallel to the surface of the covers in Figures 15 through 19, they could be bent inwardly towards the diaphragm section of the diaphragm/gasket member as is described in the first embodiment of the invention. The teeth shown in Figures 15 through 20 are integral with the cover

- 17 -  0107267

but they may be formed as a separate part and then welded or otherwise secured to the cover.

The invention will now be further described by reference to the following Examples.

### Example 1

Several lots of "D" size cylindrical alkaline $MnO_2$ cells were assembled using the cover-diaphragm/gasket assembly shown in Figures 11, 12 and 13. The diaphragm/gasket material employed in each cell lot is as shown in Table 1. Some of the diaphragm sections of the diaphragm/gasket member were coated on the underside with asphalt and this information is also shown in Table 1.

The cells in each lot were stored at 71°C and monitored weekly for any leakage and bulging. The data observed are shown in Table 1. As evident from the data shown, the preferred embodiment of the cell would entail the coating of the underside of at least the diaphragm section of the diaphragm/gasket since the leakage that occured in the cells was through the stress induced cracks in the diaphragm of the diaphragm/gasket member.

## TABLE 1

| Cell Lot | Nylon Gasket | Coating | Number of Cells | % Leakage at Weeks Age Shown | | | | | | | |
|---|---|---|---|---|---|---|---|---|---|---|---|
| | | | | 1 | 2 | 3 | 4 | 5 | 6 | 7 | 8 |
| 1 | 6-6 | None | 10 | 0 | 0 | 0 | 0 | 0 | 0 | 0 | 0 |
| 2 | 6-6 | None | 50 | 0 | 0 | 0 | 0 | 4 | 24 | 56 | 70 |
| 3 | 6-6 | None | 20 | 0 | 0 | 0 | 10 | 20 | 45 | 60 | 70 |
| 4 | 6-6 | None | 20 | 0 | 15 | 25 | 60 | 100 | 100 | 100 | 100 |
| 5 | 6-6 | None | 10 | 0 | 10 | 10 | 40 | 60 | 80 | 80 | 90 |
| 6 | 6-6 | None | 10 | 0 | 10 | 30 | 70 | 100 | 100 | 100 | 100 |
| 7 | 6-6 | None | 20 | 0 | 15 | 30 | 90 | 100 | 100 | 100 | 100 |
| 8 | 6-6 | Asphalt | 20 | 0 | 0 | 0 | 0 | 0 | 0 | 0 | 0 |
| 9 | 6-6 | Asphalt | 50 | 0 | 0 | 0 | 0 | 4 | 10 | 36 | 48 |
| 10 | 6-6 | Asphalt | 20 | 0 | 0 | 0 | 10 | 20 | 30 | 35 | 40 |
| 11 | 6-6 | Asphalt | 20 | 0 | 0 | 0 | 0 | 15 | 40 | 45 | 70 |
| 12 | 6-6 | Asphalt | 10 | 0 | 0 | 0 | 0 | 0 | 40 | 40 | 50 |
| 13 | 6-6 | Asphalt | 10 | 0 | 0 | 0 | 0 | 10 | 50 | 90 | 90 |
| 14 | 6-6 | Asphalt | 20 | 0 | 0 | 5 | 15 | 30 | 55 | 85 | 95 |
| 15 | 6-6 | Asphalt | 20 | 0 | 0 | 0 | 0 | 10 | 45 | 50 | 60 |
| 16 | 6-12 | None | 10 | 0 | 0 | 0 | 0 | 0 | 0 | 10 | 10 |
| 17 | 6-12 | None | 10 | 0 | 0 | 0 | 0 | 0 | 80 | 100 | 100 |
| 18 | 6-12 | None | 20 | 0 | 0 | 0 | 0 | 40 | 95 | 100 | 100 |
| 19 | 6-12 | None | 20 | 0 | 0 | 0 | 0 | 5 | 95 | 100 | 100 |
| 20 | 6-12 | Asphalt | 10 | 0 | 0 | 0 | 0 | 0 | 0 | 0 | 0 |
| 21 | 6-12 | Asphalt | 10 | 0 | 0 | 0 | 0 | 0 | 0 | 0 | 0 |
| 22 | 6-12 | Asphalt | 13 | 0 | 0 | 0 | 0 | 0 | 0 | 0 | 0 |
| 23 | 6-12 | Asphalt | 20 | 0 | 0 | 0 | 0 | 0 | 0 | 0 | 0 |

TABLE 1 CONTINUED

| Cell Lot | Average Net Bulge at Weeks Age Shown (.001 inch) | | | | | | | |
|---|---|---|---|---|---|---|---|---|
| | 1 | 2 | 3 | 4 | 5 | 6 | 7 | 8 |
| 1 | – | – | 9 | 12 | 13 | 14 | 15 | 16 |
| 2 | 4 | 6 | 8 | 9 | 10 | 9 | 10 | 8 |
| 3 | 2 | 9 | 12 | 11 | 13 | 10 | 10 | 6 |
| 4 | 13 | 12 | 15 | 13 | 7 | – | – | – |
| 5 | 4 | 7 | 7 | 9 | 9 | 8 | 14 | 8 |
| 6 | 3 | 6 | 6 | 7 | 10 | – | – | – |
| 7 | 6 | 8 | 9 | 9 | 16 | 9 | – | – |
| 8 | – | – | 9 | 12 | 13 | 14 | 15 | 17 |
| 9 | 5 | 7 | 9 | 10 | 11 | 14 | 13 | 14 |
| 10 | 9 | 11 | 14 | 13 | 17 | 16 | 19 | 20 |
| 11 | 13 | 13 | 16 | 16 | 19 | 20 | 25 | 21 |
| 12 | 2 | 4 | 5 | 6 | 8 | 8 | 8 | 7 |
| 13 | 3 | 5 | 5 | 7 | 9 | 11 | 13 | 11 |
| 14 | 4 | 9 | 10 | 12 | 14 | 17 | 13 | 8 |
| 15 | 7 | 9 | 11 | 13 | 13 | 16 | 18 | 16 |
| 16 | 3 | 7 | 7 | 8 | 10 | 11 | 12 | 11 |
| 17 | 3 | 7 | 7 | 8 | 11 | 12 | 8 | – |
| 18 | 7 | 11 | 12 | 13 | 15 | 16 | 16 | – |
| 19 | 10 | 10 | 11 | 14 | 14 | 14 | – | – |
| 20 | 7 | 10 | 9 | 11 | 11 | 12 | 13 | 12 |
| 21 | 6 | 8 | 8 | 10 | 12 | 15 | 19 | 22 |
| 22 | 6 | 11 | 12 | 14 | 16 | 21 | 23 | 26 |
| 23 | 9 | 11 | 12 | 15 | 16 | 18 | 21 | 22 |

- 20 -

## Example 2

Twenty-two lots of "C" size cylindrical alkaline $MnO_2$ cells were assembled using the cover-diaphragm/gasket assembly shown in Figure 5 or Figure 8. Cell Lots 1 through 7 employed a 6-6 nylon diaphragm/gasket while in cell Lots 8 through 22, a 6-12 nylon diaphragm/gasket was employed. In Cell Lots 1 through 3 and 8 through 13 the teeth in the cover were as shown in Figure 8. In Cell Lots 4, 6, 15 and 17 through 19 the teeth in the cover were as shown in Figure 5 with the tips of the teeth flush with the flange of the cover. Cell Lots 5, 7, 14, 16 and 20 through 22 employed a cover-diaphragm/gasket assembly as shown in Figure 5 except the tips of the teeth extended 0.005 inch below the flange of the cover. Some of the diaphragm/gaskets in the Cell Lots were coated with a material as shown in Table 2.

The cells in each lot were stored at 71°C and monitored weekly for any leakage and bulging. The percent leakage and average net bottom bulge of the cells in each Lot are shown in Table 2. A small number of cells in Cell Lots 8 through 22 were static-pressure tested to determine when the diaphragm will tear to form a vent opening. The data obtained are shown in Table 2.

Table 2

| Cell Lot | Gasket Coating | No. of Coats | Number of Cells | % Leakage at Weeks Shown | | | | | | | Average Net Bulge at Weeks Shown (inch) | | | | Vent Pressure (p.s.i.) |
|---|---|---|---|---|---|---|---|---|---|---|---|---|---|---|---|
| | | | | 1 | 2 | 3 | 4 | 6 | 7 | 8 | 2 | 4 | 6 | 8 | |
| 1 | Asphalt | 1 | 20 | 0 | 0 | 10 | 10 | 20 | 45 | 45 | .014 | .018 | .019 | .019 | |
| 2 | Asphalt | 2 | 20 | 0 | 0 | 5 | 5 | 30 | 35 | 35 | .015 | .019 | .018 | .021 | |
| 3 | None | – | 20 | 55 | 100 | 100 | 100 | 100 | 100 | 100 | .010 | – | – | – | |
| 4 | Asphalt | 1 | 20 | 0 | 0 | 0 | 10 | 10 | 15 | 15 | .014 | .018 | .020 | .020 | |
| 5 | Asphalt | 2 | 20 | 0 | 10 | 10 | 10 | 15 | 20 | 20 | .017 | .021 | .020 | .021 | |
| 6 | None | – | 20 | 5 | 80 | 100 | 100 | 100 | 100 | 100 | .015 | – | – | – | |
| 7 | None | – | 20 | 0 | 65 | 90 | 100 | 100 | 100 | 100 | .008 | .011 | – | – | |
| 8 | Asphalt | – | 20 | 0 | 0 | 0 | 0 | 0 | 0 | 0 | .014 | .018 | .018 | .019 | 667 |
| 9 | Asphalt | 2 | 20 | 0 | 0 | 0 | 0 | 0 | 0 | 0 | .013 | .017 | .017 | .016 | 683 |
| 10 | None | – | 20 | 0 | 25 | 85 | 100 | 100 | 100 | 100 | .017 | .016 | – | – | 617 |
| 11 | * | 1 | 20 | 0 | 10 | 50 | 70 | 85 | 85 | 85 | .012 | .017 | .016 | .016 | 617 |
| 12 | ** | 2 | 20 | 0 | 5 | 40 | 55 | 80 | 80 | 80 | .014 | .016 | .015 | .014 | 600 |
| 13 | *** | 1 | 20 | 0 | 0 | 0 | 0 | 10 | 10 | 10 | .015 | .018 | .018 | .018 | 650 |
| 14 | Asphalt | 1 | 20 | 0 | 0 | 0 | 0 | 0 | 0 | 0 | .016 | .019 | .019 | .019 | 750 |
| 15 | Asphalt | 2 | 20 | 0 | 0 | 0 | 0 | 0 | 0 | 0 | .015 | .019 | .020 | .023 | 700 |
| 16 | None | – | 20 | 0 | 0 | 0 | 0 | 0 | 0 | 5 | .014 | .018 | .019 | .019 | 733 |
| 17 | None | – | 20 | 0 | 0 | 0 | 0 | 0 | 5 | 5 | .018 | .020 | .021 | .020 | 600 |
| 18 | * | 1 | 20 | 0 | 0 | 0 | 0 | 0 | 5 | 5 | .012 | .019 | .018 | .019 | 767 |
| 19 | ** | 2 | 20 | 0 | 0 | 0 | 0 | 0 | 0 | 0 | .012 | .018 | .018 | .018 | 717 |
| 20 | *** | 1 | 20 | 0 | 10 | 10 | 10 | 10 | 10 | 10 | .014 | .017 | .018 | .018 | 700 |
| 21 | None | – | 14 | 0 | 0 | 0 | 0 | 0 | | | .015 | .021 | .021 | | 700 |
| 22 | Asphalt | 1 | 5 | 0 | 0 | 0 | 0 | 0 | | | .014 | .021 | .020 | | 683 |

*Microcrystalline Wax
**Halocarbon wax
***Swift's polyamide hot melt

- 22 -

## Example 3

A large number of "C" size cylindrical alkaline $MnO_2$ cells were assembled either using the cover-diaphragm/gasket assembly of Fig. 5 or Fig. 8 as shown in Table 3. The cells in each Cell Lot were charged at 500 ma for 4 hours (abusive charge test) and any venting through the diaphragm of the diaphragm/gasket of the cells was observed. The data observed are reported in Table 3.

### Table 3

| Cell Lot | Cover-Diaphragm/ Gasket Assembly | Diaphragm/ Gasket Material | Number of Cells | Number of cell venting |
|---|---|---|---|---|
| 1 | Figure 5 | Nylon 6-6 | 1152 | 1152 |
| 2 | Figure 5 | Nylon 6-12 | 924 | 921 |
| 3 | Figure 8 | Nylon 6-12 | 392 | 392 |

## Example 4

Seven lots of cover-diaphragm/gasket assemblies for "D" size cells were made. Lots 1 and 2 used the cover-diaphragm/gasket assembly of Figure 11; Lots 3 and 4 used the same cover-diaphragm/gasket assembly of Lots 1 and 2 except the four inside teeth were removed; Lots 5 and 6 used the cover-diaphragm/gasket assembly of Figure 11 except only two openings were punched in the cover; and Lot 7 used the cover-diaphragm/gasket assembly of Lots 5 and 6 except the two inside teeth were removed. Several cover-diaphragm/gasket assemblies from each lot were assembled with a collector rod and then secured to the open end of a container. Nitrogen gas pressure buildup within the container was continued until the diaphragm section tore producing a vent opening in the cover-diaphragm/gasket assembly. The vent pressure in which the diaphragm section tore in each Lot was observed. The maximum and minimum vent pressures noted for each diaphragm section to tear in each Lot along with the average vent pressure calculated for the tearing of the diaphragm sections in each Lot are shown in Table 4.

Several additional cover-diaphragm/gasket assemblies were assembled in "D" size cylindrical alkaline $MnO_2$ cells and the hydraulic pressure required to tear an opening in the diaphragm of each cell was observed. The maximum and minimum vent pressures for the cells in each Lot along with average vent pressure calculated in the tearing of the diaphragm sections for the cells in each Lot are shown in Table 4. As evident from the data, the pressure at which the cells are to vent can be varied depending on the particular cover-diaphragm/gasket assembly employed.

Although preferred embodiments of this invention have been described in detail, it is contemplated that modifications and changes to the preferred embodiments of the invention herein shown and described can be made without departing from the spirit and scope of the invention.

- 24 -

## TABLE 4

| Cell Lot | Nylon Gasket | Coating | Number of Assemblies Each Test | Nitrogen Test with Collectors Vent Pressure - psi | | |
|---|---|---|---|---|---|---|
| | | | | Average | Maximum | Minimum |
| 1 | 6-6 | No | 10 | 410 | 450 | 350 |
| 2 | 6-6 | Asphalt | 10 | 420 | 500 | 325 |
| 3 | 6-6 | No | 5 | 455 | 550 | 375 |
| 4 | 6-6 | Asphalt | 5 | 450 | 500 | 325 |
| 5 | 6-6 | No | 5 | 470 | 550 | 350 |
| 6 | 6-6 | Asphalt | 5 | 580 | 625 | 525 |
| 7 | 6-6 | No | 5 | 525 | 550 | 450 |

## TABLE 4 CONTINUED

| Cell Lot | Hydraulic Test with Raw Cells Vent Pressure - psi | | |
|---|---|---|---|
| | Average | Maximum | Minimum |
| 1 | 441 | 520 | 400 |
| 2 | 473 | 530 | 370 |
| 3 | 472 | 510 | 440 |
| 4 | 482 | 530 | 450 |
| 5 | 512 | 560 | 460 |
| 6 | 616 | 630 | 600 |
| 7 | 546 | 570 | 520 |

- 25 -

0107267

CLAIMS

1. A galvanic cell comprising a container (14) having an open end and an inner disposed active anode, an active cathode and an electrolyte within said container; a diaphragm/gasket member (4,16) disposed over the anode and the cathode; and a cover (2,18) secured over and insulated from the open end of the container; characterised in that said cover (2,18) has at least one opening (8,22) with at least two cooperating teeth (12) extending therefrom and which teeth (12) are bent inwardly towards the diaphragm section (6) of the diaphragm/gasket member (4,16) and said diaphragm/gasket (4,16) being in cooperative relation to the teeth (12) so that upon a predetermined level of internal gas pressure buildup within the cell, the diaphragm section (6) will be forced against the sharp end of the teeth (12) thereby securing, puncturing and tearing the diaphragm section (6) to form a vent opening for the gas to escape.

2. A cell as claimed in claim 1, characterised in that the at least one opening (8) is formed by overlapping circular contours (10).

3. A cell as claimed in claim 1, characterised in that the at least one opening is formed by overlapping square contours.

4. A cell as claimed in claim 1, characterised in that the at least one opening is formed by overlapping triangular contours.

5. A cell as claimed in any one of the preceding claims, characterised in that at least the undersurface of the diaphragm/gakset (4) is coated with a protective material.

- 26 -

0107267

6. A galvanic cell comprising a container having an open end and an inner disposed active anode, an active cathode and an electrolyte within said container; a diaphragm/gakset member (30) disposed over the anode and the cathode; and a cover (28,41) secured over and insulated from the open end of the container; characterised in that said cover (28) has at least one opening (32,40) which defines at least one tooth (36,44) disposed substantially parallel to the plane of the edge defining said opening (32,40) and said diaphragm/gasket member (20) being in cooperative relation to the at least one tooth (32,44) so that upon a predetermined level of internal gas pressure buildup within the cell, the diaphragm section (31,39) of the diaphragm/gasket member (30) will be forced against the sharp end of the tooth (36,44) where it will be restrained and sheared thereby forming a vent opening for the gas to escape.

7. A galvanic cell as claimed in claim 6, characterised in that the at least one opening is formed by overlapping circular contours (34).

8. A galvanic cell as claimed in claim 6, characterised in that the at least one opening is formed by overlapping square contours.

9. A galvanic cell as claimed in claim 6, characterised in that the at least one opening is formed by overlapping triangular contours.

10. A glavanic cell as claimed in claim 6, 7, 8 or 9, characterised in that at least the underside of the diaphragm/gasket is coated with a protective material.

. . . . . . . . . . . . . . . . . . . . . . . . . . . . . . . . . . . . . . . . . . . . . . . . .

0107267

FIG.1

FIG.2

FIG.3

FIG.4

2/5

0107267

FIG.5

FIG.6

FIG.7

0107267

FIG.8

FIG.9

FIG.10

0107267

FIG.11

FIG.12

FIG.13

FIG.14

0107267

5/5

FIG.15

FIG.16

FIG.17

FIG.18

FIG.19

FIG.20

0107267

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-2 380 964 (E.E. GROVER) <br> * Figures 6,7; page 2, left-hand column, lines 53-65 * | 6,7 | H 01 M 2/12 |
| D,A | US-A-3 062 910 (R.L. SCHENK) | | |
| D,A | US-A-3 314 824 (F.G. SPANUR) | | |
| A | US-A-1 725 092 (A. LOWY) <br><br> * Figures 6,7; page 2, lines 80-119 * | | |
| A | PATENTS ABSTRACTS OF JAPAN, vol. 6, no. 107(E-113)(985), 17th June 1982 <br> & JP - A - 57 38563 (MATSUSHITA DENKI SANGYO K.K.) 03-03-1982 | | TECHNICAL FIELDS SEARCHED (Int. Cl. ³) <br><br> H 01 M 2/12 <br> H 01 G 9/12 <br> B 65 D 51/16 |

The present search report has been drawn up for all claims

| Place of search | Date of completion of the search | Examiner |
|---|---|---|
| THE HAGUE | 05-10-1983 | D'HONDT J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document